# EUROPÄISCHE PATENTANMELDUNG

(11) **EP 4 471 627 A1**
(43) Veröffentlichungstag der Anmeldung: **04.12.2024**
(21) Anmeldenummer: 24176174.1
(22) Anmeldetag: 16.05.2024
(51) Int. Cl.: G06F 21/31, H04L 9/40

(54) **SYSTEM FÜR EINE ZUGRIFFSKONTROLLE**

(30) Priorität: 31.05.2023 LU 504358
(71) Anmelder: Saurer Spinning Solutions GmbH & Co. KG, 52531 Übach-Palenberg (DE)
(72) Erfinder: Gais, Ulrich, 58313 Herdecke (DE); Schmitz, Johannes, 52531 Übach-Palenberg (DE)
(74) Vertreter: Morgenthum-Neurode, Mirko

(57) **Zusammenfassung**

Die Erfindung betrifft ein System (1) für eine Zugriffskontrolle, aufweisend eine Textilmaschine (10) und ein Steuersystem (20) zum Überwachen und Steuern der Textilmaschine (10), wobei die Textilmaschine (10) und das Steuersystem (20) in einem ersten Kommunikationsnetz (50) für die Übertragung von Steuerbefehlen, insbesondere Steuerungssignalen, zum Steuern der Textilmaschine (10) angeordnet sind. Um eine bessere und einfachere Administration und Kontrolle von Zugriffsrechten mit Unterstützung einer existierenden Authentifizierungsinfrastruktur zu gewährleisten, ist vorgesehen, dass das System (1) ein Authentifizierungssystem (30) aufweist, wobei das Authentifizierungssystem (30) in einem zweiten Kommunikationsnetz (60) angeordnet ist, und wobei das Authentifizierungssystem (30) dazu ausgebildet ist, wenigstens einen Benutzer (5) zu authentifizieren, um einen Zugriff für die Steuerung der Textilmaschine (10) in dem ersten Kommunikationsnetz (50) freizugeben, vorzugsweise einen Zugriff für eine Einstellung und/oder Konfiguration von Produktionsparametern für die Textilmaschine (10) durch den wenigstens einen Benutzer (5) freizugeben.

## Beschreibung

Die vorliegende Erfindung betrifft ein System gemäß der im Oberbegriff des Anspruchs 1 näher definierten Art. Ferner bezieht sich die Erfindung auf ein Verfahren, ein Computerprogramm sowie eine Vorrichtung.

### Stand der Technik

Der Zugriff zum Steuern einer Maschine kann in der Regel über eine Steuereinheit bereitgestellt werden, die in die Maschine integriert oder separat von der Maschine ausgeführt ist. Die Steuereinheit kann dabei verschiedene Prozesse der Maschine kontrollieren und überwachen, wie zum Beispiel den Antrieb, die Geschwindigkeit, die Temperatur oder den Druck. Moderne Steuersysteme ermöglichen oft auch eine Fernsteuerung, so dass die Maschine von einem entfernten Standort aus überwacht und gesteuert werden kann. Die Zugriffsrechte auf die Steuereinheit müssen jedoch sorgfältig verwaltet werden, um unbefugten Zugriff auf die Maschine zu vermeiden und einen sicheren Betreib der Maschine zu gewährleisten.

Der Zugriff auf die Steuereinheit kann häufig nur durch eine manuelle Eingabe von Benutzername und Passwort geschützt werden. Die Verwaltung der Zugriffsrechte geschieht kompliziert, zeitaufwendig und manuell an jeder einzelnen Maschine durch eine entsprechend autorisierte Personen. Die Identifizierung des Benutzers erfolgt durch eine aufwendige manuelle Eingabe von Benutzername und Passwort, welche vom Benutzer vergessen werden können.

Es ist dahereine Aufgabe der vorliegenden Erfindung, die voranstehend beschriebenen Nachteile zumindest teilweise zu beheben. Insbesondere ist es Aufgabe der vorliegenden Erfindung, eine verbesserte Identifizierung des Benutzers mit vorhandenen Identifikationsmitteln bereitzustellen. Es kann eine weitere Aufgabe der vorliegenden Erfindung sein, eine bessere und einfachere Administration von Zugriffsrechten mit Unterstützung einer existierenden Authentifizierungsinfrastruktur zu gewährleisten.

### Offenbarung der Erfindung

Gegenstand der Erfindung ist ein System mit den Merkmalen des Anspruchs 1, ein Verfahren mit den Merkmalen des Anspruchs 11, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit dem erfindungsgemäßen Verfahren, dem erfindungsgemäßen Computerprogramm sowie der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein System für eine Zugriffskontrolle, aufweisend eine Textilmaschine und ein Steuersystem zum Überwachen und Steuern der Textilmaschine. Das Steuersystem kann z. B. eine elektronische Vorrichtung sein, welche die Textilmaschine elektrisch ansteuert, um die Textilmaschine zu konfigurieren und/oder einzustellen und/oder in wenigstens einen Betriebszustand zu überführen. Dabei kann die Textilmaschine und das Steuersystem in einem ersten Kommunikationsnetz für die Übertragung von Steuerbefehlen, insbesondere Steuerungssignalen, zum Steuern der Textilmaschine angeordnet sein. Das Kommunikationsnetz ist z. B. ein Netzwerk zur Datenübertragung, mit welchem sowohl die Textilmaschine als auch das Steuersystem verbunden sein können. Ferner kann das System ein Authentifizierungssystem aufweisen, wobei das Authentifizierungssystem in einem zweiten Kommunikationsnetz angeordnet ist. Das zweite Kommunikationsnetz kann ebenfalls ein Netzwerk zur Datenübertragung sein, welches sich jedoch vom ersten Kommunikationsnetz, vorzugsweise auch hinsichtlich einer Netzwerktechnologie, unterscheidet. Es kann möglich sein, dass das Authentifizierungssystem dazu ausgebildet ist, wenigstens einen Benutzer zu authentifizieren, um einen Zugriff für die Steuerung der Textilmaschine in dem ersten Kommunikationsnetz freizugeben, vorzugsweise einen Zugriff für eine Einstellung und/oder Konfiguration von Produktionsparametern für die Textilmaschine durch den wenigstens einen Benutzer freizugeben. Dies hat den Vorteil, dass ein ressourcenschonendes System für eine Zugriffskontrolle bereitgestellt werden kann, weil für die Authentifizierung des wenigstens einen Benutzers bereits vorhandene Authentifizierungs- und/oder Identifikationsmittel verwendet werden können. Ferner ermöglicht die Erfindung eine bessere und einfachere Administration von Zugriffsrechten mit Unterstützung einer existierenden Authentifizierungsinfrastruktur.

Es kann vorgesehen sein, dass das Steuersystem eine Überwachungseinheit und eine Steuereinheit zum Überwachen und Steuern der Textilmaschine umfasst. Die Überwachungseinheit kann insbesondere als zentrale Überwachungseinheit für eine oder mehrere Textilmaschinen ausgeführt sein. Die Überwachungseinheit kann eine Steuerungs- und Managementsoftware umfassen, welche insbesondere zur Überwachung und Konfiguration der einen oder mehreren Textilmaschinen dienen kann. Es können beispielsweise Parameter oder Einstellungen für die Textilmaschine überwacht, geändert und/oder konfiguriert werden. Dies kann dann über entsprechende Steuerbefehle initiiert werden. Die Steuereinheit des Steuersystems kann in oder an einer Textilmaschine angeordnet sein und kann zum Steuern der Textilmaschine vorgesehen sein. Die Überwachungseinheit und die Steuereinheit können als jeweilige Vorrichtung für den Zugang des Benutzers zum Steuern der Textilmaschine vorgesehen sein.

Authentifizierung kann im Rahmen der Erfindung insbesondere bedeuten, dass die Identität eines Benutzers oder einer Entität überprüft wird, um sicherzustellen, dass diese Person oder Entität tatsächlich die ist, die sie vorgibt zu sein. Dies kann durch eine Eingabe von Benutzername und Passwort oder durch den Einsatz von biometrischen Merkmalen wie Fingerabdrücken oder Gesichtserkennung erfolgen. Auch kann unter Authentifizierung im Rahmen der Erfindung verstanden werden, dass eine Eigenschaft des Benutzers wie eine Befugnis zur Steuerung nachgewiesen wird. Die Authentifizierung wird häufig in Computersystemen und Online-Diensten verwendet, um den Zugang zu geschützten Ressourcen zu kontrollieren und unbefugten Zugriff zu verhindern.

Dabei bezeichnet eine Zugriffskontrolle insbesondere Maßnahmen oder Technologien, die angewendet werden, um den Zugriff auf Informationen, Systeme oder physische Räume zu beschränken und zu kontrollieren. Das Ziel der Zugriffskontrolle besteht darin, unbefugte Zugriffe zu verhindern und sicherzustellen, dass nur autorisierte Benutzer auf die benötigten Ressourcen zugreifen können. Hierzu können verschiedene Mechanismen wie Passwörter, biometrische Merkmale oder Schlüssel eingesetzt werden.

Eine Textilmaschine wie beispielsweise eine Spul- oder Spinnmaschine kann verwendet werden, um Fasern oder Garne zu spinnen und/oder auf Spulen zu wickeln. Die Maschine kann eine Vorrichtung umfassen, die es ermöglicht, Fasern manuell oder automatisch in die Maschine einzuführen. Die Maschine kann einen Spinnmechanismus aufweisen, welcher aus einem Spinnflügel oder einer Spindel besteht, die sich mit hoher Geschwindigkeit dreht. Dies dient dazu, dass die Fasern zusammengezogen und zu einem Garn versponnen werden können.

Die Einstellung von Parametern für eine Textilmaschine wie beispielsweise für eine Spul- und/oder Spinnmaschine, bezieht sich insbesondere auf die Anpassung von Werten, die z. B. in einem Textilmaschinen-Management-System verwendet werden können, um das Verhalten der Textilmaschine zu ändern oder anzupassen. Parameter können beispielsweise verwendet werden, um den Zeitaufwand für die Verarbeitung von Anforderungen zu reduzieren oder die Anzahl von gleichzeitig ausgeführten Prozessen zu steuern. Die Einstellung von Parametern kann von einem Benutzer vorgenommen werden, um die Leistung oder Funktionalität der Anwendung oder des Systems zu verbessern. Die Konfiguration von Parametern hingegen bezieht sich insbesondere auf den Prozess der Einstellung von Parametern, der normalerweise vom Administrator oder Systembetreuer durchgeführt wird. Die Konfiguration von Parametern umfasst die Einstellung von Parametern auf der Systemebene eines Management-Systems oder einer Textilmaschinenebene des Systems, um sicherzustellen, dass die Textilmaschine ordnungsgemäß funktioniert und die Produktionsanforderungen erfüllt werden.

Ein Maschinen-Management-System oder auch engl. Mill-Management-System kann als ein Computersystem ausgeführt sein, das zur Steuerung und Überwachung von Produktionsprozessen in der Textilindustrie eingesetzt werden kann. Es kann Daten aus verschiedenen Quellen sammeln und analysieren, einschließlich Maschinensteuerungen, Sensoren oder Handeingaben, um die Effizienz und Produktivität der Produktion zu optimieren. Dieses System ermöglicht es den Betreibern, Echtzeit-Informationen über den Status der Textilmaschine und die Fortschritte der Produktion zu erhalten, sowie potenzielle Probleme zu identifizieren und zu beheben. Ein Mill-Management-System kann auch Funktionen wie die Auftragsplanung, Material- und Ressourcenverwaltung, Qualitätskontrolle und Lagerbestandsmanagement umfassen.

Ein weiterer Vorteil im Rahmen der Erfindung ist erzielbar, wenn das System eine Sensoreinheit für die Erfassung von Identifikationsdaten des wenigstens einen Benutzers zur Authentifizierung aufweist, wobei die Sensoreinheit in dem ersten oder in dem zweiten Kommunikationsnetz angeordnet ist. Eine Anordnung der Sensoreinheit in dem ersten Kommunikationsnetz kann den Vorteil haben, dass die Sensoreinheit näher an der Textilmaschine angeordnet ist und ggf. über das erste Kommunikationsnetz direkt mit der Textilmaschine kommunizieren kann. Auch kann es möglich sein, dass wenigstens ein bestehender Sensor der Textilmaschine als Sensoreinheit verwendet wird. Eine Anordnung der Sensoreinheit in dem zweiten Kommunikationsnetz kann den Vorteil haben, dass eine direkte Kommunikation mit dem Authentifizierungssystem im zweiten Kommunikationsnetz möglich ist und dass eine vorhandene Authentifizierungsinfrastruktur genutzt werden kann. Die Anordnung im ersten oder zweiten Kommunikationsnetz kann bedeuten, dass die Sensoreinheit als Netzwerkteilnehmer in das entsprechende Kommunikationsnetz integriert ist.

Vorteilhaft ist es darüber hinaus, wenn im Rahmen der Erfindung die Sensoreinheit in dem zweiten Kommunikationsnetz dazu ausgebildet ist, die erfassten Identifikationsdaten an das Authentifizierungssystem zur Authentifizierung zu übermitteln. Ebenfalls ist es denkbar, dass die Sensoreinheit in dem ersten Kommunikationsnetz dazu ausgebildet ist, die erfassten Identifikationsdaten an das Authentifizierungssystem zur Authentifizierung oder an das Steuersystem zur Authentifizierung zu übermitteln. Dies ermöglicht es, dass eine Authentifizierung effizient und direkt zwischen der Sensoreinheit und dem Authentifizierungssystem durchgeführt werden kann.

Des Weiteren kann vorgesehen sein, dass die Sensoreinheit ein Kartenlesegerät und/oder ein Finger-Print-Scanner und/oder einen Retina-Scanner und/oder eine Kamera mit Gesichtserkennung und/oder Spracherkennung aufweist. Allgemeiner ausgedrückt kann die Sensoreinheit zur Erfassung wenigstens eines oder mehrerer biometrischen Merkmale des Benutzers ausgeführt sein. Dadurch kann die Sicherheit und Flexibilität des Systems deutlich erhöht werden.

Ferner kann im Rahmen der Erfindung vorgesehen sein, dass das System eine Schnittstelle aufweist, welche die Textilmaschine und/oder das Steuersystem in dem ersten Kommunikationsnetz mit dem Authentifizierungssystem in dem zweiten Kommunikationsnetz kommunikationstechnisch verbindet. Dabei kann die Schnittstelle dazu ausgebildet sein, eine Authentifizierungsinformation von dem Authentifizierungssystem an die Textilmaschine und/oder an das Steuersystem zu übertragen, um den Zugriff für die Steuerung für den wenigstens einen Benutzer freizugeben oder zu sperren. Die Authentifizierungsinformation kann beispielsweise an das Steuersystem übertragen werden, damit die Steuersystem die Authentifizierungsinformation zunächst auswerten kann, um auf Basis der Auswertung die Steuerung der Textilmaschine zu ermöglichen. Beispielsweise kann das Steuersystem die Steuerung erst dann ermöglichen, wenn die Auswertung ergibt, dass der Benutzer hierzu berechtigt ist. Die Textilmaschine kann hingegen auf die Steuerbefehle reagieren, ohne die Authentifizierungsinformation aktiv zu berücksichtigen.

Damit kann die Textilmaschine unabhängig von einer konkreten Authentifizierungsmethode hergestellt werden. Auch ist es denkbar, dass die Textilmaschine die Authentifizierungsinformation empfängt, und somit selbst aktiv auswertet, ob die Steuerbefehle umgesetzt werden. Bspw. kann die Authentifizierungsinformation auch den Steuerbefehlen hinzugefügt werden, damit die Textilmaschine bei jedem Steuerbefehl prüfen kann, ob seine Umsetzung gestattet ist.

Ein weiterer Vorteil kann im Rahmen der Erfindung erzielt werden, wenn die Schnittstelle eine Konvertierungseinheit aufweist, welche dazu ausgebildet ist, ein Datenformat und/oder ein Netzprotokoll der Authentifizierungsinformation bei der Übertragung zwischen den beiden Kommunikationsnetzen für die Einstellung von Produktionsparametern für die Textilmaschine zu konvertieren. Dies ermöglicht den Einsatz von unterschiedlichen Netzwerktechnologien für die Kommunikationsnetze. Dies ermöglicht ferner, dass die Kommunikation zwischen dem Authentifizierungssystem in dem zweiten Kommunikationsnetz und dem Maschinensystem umfassend die Textilmaschine und das Steuersystem in dem ersten Kommunikationsnetz störungsfrei und sicher über die Schnittstelle erfolgen kann. Die Schnittstelle ermöglicht es, dass bei unterschiedlichen Anforderungen an ein Datenformat oder eine Netzprotokoll in dem jeweiligen Kommunikationsnetz eine effektive und interoperable Kommunikation gewährleistet wird. D. h., dass die Schnittstelle vorteilhafterweise eine bessere Interoperabilität zwischen verschiedenen Netzwerktechnologien und -protokollen gewährleistet, einschließlich beispielsweise der Konvertierung von Daten zwischen verschiedenen Netzwerkformaten.

Beispielsweise kann es vorgesehen sein, dass die Authentifizierungsinformation eine Kommunikationsnachricht bezüglich einer Freigabe oder einer Sperre des Zugriffs des wenigstens einen Benutzers für die Steuerung der Textilmaschine umfasst. Auch ist es denkbar, dass die Authentifizierungsinformation eine Kommunikationsnachricht umfassend ein oder mehrere Berechtigungsprofile für den wenigstens einen Benutzer für den Zugriff umfasst, wobei vorzugsweise das jeweilige Berechtigungsprofil einen Umfang und/oder eine Konfiguration des Zugriffs für den jeweiligen Benutzer, insbesondere für die Steuerung unterschiedlicher Funktionen der Textilmaschine und/oder des Steuersystems, definiert. Dies ermöglicht es, dass das Authentifizierungssystem aufgrund unterschiedlicher Sicherheitsvorgaben bei der Authentifizierung die Kommunikation innerhalb des Systems flexibel anpassen kann.

Ferner kann im Rahmen der Erfindung vorgesehen sein, dass das Authentifizierungssystem eine Datenbank aufweist, welche Daten für die Authentifizierung des wenigstens einen Benutzers für den Zugriff, insbesondere Zugriffs- und/oder Berechtigungsprofile für den wenigstens einen Benutzer, umfasst. Dies hat den Vorteil, dass eine systematische Organisation und Strukturierung von Daten ermöglicht werden kann, insbesondere erleichtert die Datenbank die Suche und den Zugriff auf Daten sowie die Möglichkeit, Daten effizienter und zuverlässiger zu speichern. Ferner ermöglicht die Datenbank, eine sichere Möglichkeit, Daten zu speichern und zu schützen. Benutzer können Zugriffsrechte auf Daten steuern, um ihre Vertraulichkeit und Integrität zu gewährleisten.

Bevorzugt kann im Rahmen der Erfindung vorgesehen sein, dass die Textilmaschine als eine Spul- oder Spinnmaschine ausgeführt ist, vorzugsweise als eine Luftspinnmaschine oder eine Rotorspinnmaschine oder eine Ringspinnmaschine, wobei die Textilmaschine eine Vielzahl nebeneinander angeordneter Arbeitsstellen aufweist, vorzugsweise Spinn- oder Spulstellen, welche jeweils zur Durchführung wenigstens eines Produktionsschrittes für eine Produktion eines Textilproduktes ausgeführt sind, wobei die Steuerung der Textilmaschine durch das Steuersystem zumindest eine der folgenden Aktionen umfasst, um die zumindest eine Aktion im Falle des freigegebenen Zugriffs für den Benutzer verfügbar zu machen:
- Einstellen wenigstens eines Parameters der Textilmaschine,
- Einstellen wenigstens eines Parameters der Arbeitsstellen,
- Einstellen wenigstens eines Parameters für die Produktion,
- Starten der Textilmaschine, insbesondere der Produktion,
- Einstellen eines Spinnmittels, eines Garnparameters, eines Anspinnparameters, eines Spulparameters, eines Reinigerparameters der Textilmaschine,
- Anzeigen von Messergebnissen wenigstens eines Sensors der Textilmaschine, Aktivieren oder Deaktivieren von einzelnen der Arbeitsstellen,
- Aufrufen einer grafischen Benutzeroberfläche für die Textilmaschine.

Dies ermöglicht eine bessere Zugriffskontrolle und Steuerung der Textilmaschine, um eine effiziente Produktion insbesondere einer Spul- oder Spinnmaschine zu gewährleisten.

Ein weiterer Vorteil kann im Rahmen der Erfindung erzielt werden, wenn das erste Kommunikationsnetz ein übergeordnetes Kommunikationsnetz, und das zweite Kommunikationsnetz ein Maschinen-Kommunikationsnetz der Textilmaschine ist, wobei das Maschinen-Kommunikationsnetz als ein separates Kommunikationsnetz zum ersten Kommunikationsnetz ausgebildet und/oder dem ersten Kommunikationsnetz untergeordnet und/oder als ein Subnetz des ersten Kommunikationsnetzes ausgebildet ist und/oder dass das erste und/oder das zweite Kommunikationsnetz ein kabelgebundenes und/oder kabelloses Kommunikationsnetz aufweisen, vorzugsweise ein Ethernet-Netzwerk und/oder ein Glasfaser-Netzwerk und/oder ein WLAN-Netzwerk und/oder ein ZigBee-Netzwerk und/oder ein Bluetooth-Netzwerk. Durch die Verwendung von zwei Kommunikationsnetzen kann die Sicherheit bei der Durchführung der Authentifizierung erhöht werden, da insbesondere ein Netz zur Übertragung von Authentifizierungsanfragen und von Authentifizierungsantworten verwendet werden kann, während das andere Netz beispielsweise zur Steuerung des Zugriffs der Textilmaschine dienen kann. Ferner kann die Verwendung von zwei Kommunikationsnetzen insbesondere dazu beitragen, dass das Authentifizierungsverfahren effizienter abläuft.

Ebenfalls Gegenstand der Erfindung ist ein Verfahren für eine Zugriffskontrolle für ein erfindungsgemäßes System umfassend die nachfolgenden Schritte:
- Empfangen einer Authentifizierungsanfrage durch ein Authentifizierungssystem in einem zweiten Kommunikationsnetz, mit der Authentifizierungsanfrage eine Authentifizierung wenigstens eines Benutzers angefragt wird, um den Zugriff auf die Textilmaschine für den wenigstens einen Benutzer freizugeben,
- Überprüfen der empfangenen Authentifizierungsanfrage bezüglich einer Zugriffsberechtigung des wenigstens einen Benutzers,
- Erteilen einer Freigabe des Zugriffs für den wenigstens einen Benutzer, wenn die Zugriffsberechtigung durch die Überprüfung bestätigt wird,
- Übersenden der erteilten Freigabe des Zugriffs des wenigstens einen Benutzers an die Textilmaschine und/oder an das Steuersystem und/oder an die Sensoreinheit.

Damit bringt das erfindungsgemäße Verfahren die gleichen Vorteile mit sich, wie sie ausführlich mit Bezug auf das erfindungsgemäße System dargelegt wurden.

Weiter ist im Rahmen der Erfindung denkbar, dass das Verfahren die weiteren nachfolgenden Schritte umfasst:
- Verweigern des Zugriffs für den wenigstens einen Benutzer für die Steuerung der Textilmaschine, wenn die Zugriffsberechtigung durch die Überprüfung abgelehnt wurde, wobei im Falle des Verweigerns der nachfolgende Schritt durchgeführt wird:
- Übersenden einer Sperre des Zugriffs für den wenigstens einen Benutzer an die Textilmaschine und/oder an das Steuersystem und/oder an die Sensoreinheit.

Dies ermöglicht es, dass eine effektivere Steuerung des Zugriffs gewährleistet werden kann.

Vorteilhaft ist es zudem, wenn das Verfahren zumindest einen der nachfolgenden Schritte umfasst:
- Übertragen einer Authentifizierungsinformation für die Authentifizierung des Zugriffs des wenigstens einen Benutzers an die Textilmaschine und/oder an das Steuersystem und/oder an die Sensoreinheit,
   wobei die Authentifizierungsinformation eine Kommunikationsnachricht bezüglich einer Freigabe oder einer Sperre des Zugriffs des wenigstens einen Benutzers für die Textilmaschine umfasst,
- Übertragen einer Authentifizierungsinformation für die Authentifizierung des Zugriffs des wenigstens einen Benutzers an das Steuersystem,
   wobei die Authentifizierungsinformation eine Kommunikationsnachricht aufweist, welche ein oder mehrere Zugriffsberechtigungsprofile für den wenigstens einen Benutzer zur Auswertung durch das Steuersystem umfasst,
- Erfassen von Identifikationsdaten des wenigstens einen Benutzers durch die Sensoreinheit, wobei die erfassten Identifikationsdaten für eine Identifizierung des wenigstens einen Benutzers zu einem Berechtigungsprofil oder Zugriffsprofil für die Steuerung unterschiedlicher Funktionen der Textilmaschine und/oder des Steuersystems spezifisch sind,
- Übersenden der empfangenen Identifikationsdaten an die Authentifizierungseinheit zur Authentifizierung.

Dies hat den Vorteil, dass die Zugriffskontrolle flexibel und effizient durchgeführt werden kann.

Ebenfalls Gegenstand der Erfindung ist ein Computerprogramm, insbesondere ein Computerprogrammprodukt, umfassend Befehle, die bei der Ausführung des Computerprogramms durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf das erfindungsgemäße System und das erfindungsgemäße Verfahren dargelegt wurden.

Ebenfalls Gegenstand der Erfindung ist eine Vorrichtung zur Datenverarbeitung, insbesondere zumindest teilweise angeordnet in einem Authentifizierungssystem und/oder in einem Steuersystem des erfindungsgemäßen Systems, umfassend Mittel zur Ausführung des erfindungsgemäßen Verfahrens. Damit bringt die erfindungsgemäße Vorrichtung die gleichen Vorteile mit sich, wie sie ausführlich mit Bezug auf das erfindungsgemäße System und das erfindungsgemäße Verfahren dargelegt wurden.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
Fig. 1 schematisch ein Ausführungsbeispiel des erfindungsgemäßen Verfahrens,
Fig. 2 schematisch ein weiteres Ausführungsbeispiel des erfindungsgemäßen Verfahrens und erfindungsgemäßen Systems,
Fig. 3 schematisch ein weiteres Ausführungsbeispiel des erfindungsgemäßen Verfahrens und erfindungsgemäßen Systems,
Fig. 4 schematisch ein weiteres Ausführungsbeispiel des erfindungsgemäßen Verfahrens und erfindungsgemäßen Systems, und
Fig. 5 schematisch ein weiteres Ausführungsbeispiel des erfindungsgemäßen Verfahrens und erfindungsgemäßen Systems.

In den nachfolgenden Figuren werden für die gleichen technischen Merkmale auch von unterschiedlichen Ausführungsbeispielen die identischen Bezugszeichen verwendet.

Der Kern der Erfindung ist es, ein System 1 und ein Verfahren 100 für eine Zugriffskontrolle für eine Textilmaschine 10 bereitzustellen, welches auf ein bereits bestehendes Authentifizierungssystem 30, wie beispielsweise ein Zugangs- oder Zutrittssystem zu einem Firmengebäude oder -gelände zugreifen kann, um einen Zugriff eines Benutzers 5 auf eine oder mehrere Textilmaschinen 10 auf der Grundlage von Benutzerberechtigungsprofilen zu ermöglichen.

Dabei kann beispielsweise eine Sensorik oder ein Sensorsystem mit einer Textilmaschine 10 und/oder einem Steuersystem 20 für die Textilmaschine 10 kommunikativ verbunden werden. Das Steuersystem 20 kann beispielsweise eine Überwachungseinheit 21 und eine Steuereinheit 22 umfassen. Die Überwachungseinheit 21 kann eine Steuerungs- und Management-Software zum Überwachen und Verwalten einer oder mehrerer Textilmaschinen 10 aufweisen. Dabei kann die Überwachungseinheit 21 kommunikativ mit der Steuereinheit 22 verbunden sein, um beispielsweise Steuerbefehle zum Konfigurieren und Steuern der Textilmaschine 10 an die Steuereinheit 22 zu übersenden oder zu empfangen. Die Steuereinheit 22 kann zum Steuern der Textilmaschine 10 vorgesehen sein, um beispielsweise einen Produktionsablauf zu steuern. Ferner kann ein Benutzer 5 über die Steuereinheit 22 einen Zugriff zum Steuersystem 20 erhalten. Die Authentifizierung des Benutzers an dem Steuersystem 20 wie beispielsweise an einem Bedienrechner 22 als Steuereinheit 22 des Steuersystems 20 für die Textilmaschine 10 kann mit vorhandenen Datenträgern wie z. B. einem RFID-Chip, einer Smart-Card, einem Smartphone oder einem USB-Stick erfolgen. Alternativ kann eine biometrische Datenerfassung durch eine Sensoreinheit 40 beispielsweise mit einem Finger-Print-Scanner, einem Retina-Scanner, einer Kamera mit Gesichtserkennung und/oder Spracherkennung für die Authentifizierung des Benutzers 5 zum Steuern einer Textilmaschine 10 verwendet werden, wobei die biometrische Datenerfassung bereits für den Benutzer 5 zur Zutritts-Steuerung oder zur Zeiterfassung innerhalb des Unternehmens oder des Firmengeländes dienen kann.

Mit anderen Worten: Die Textilmaschinen 10 sind kommunikations- und datentechnisch an das Steuersystem 20 angeschlossen, welches wiederum mit dem Mitarbeiter-Zutritts-/Zeiterfassungs-System des Kunden kommunikativ- und datentechnisch verbunden ist. Die relevanten Daten für eine Authentifizierung der Benutzer 5 oder Mitarbeiter des Unternehmens können mit den Daten der Textilmaschinen 10 verknüpft werden und können zur zentralen Definition, Vergabe und Verwaltung von Zugriffsrechten sowie der Authentifizierung der Benutzer 5 verwendet werden. Damit kann auch eine Überwachung des Zugriffs durchgeführt werden.

Meldet sich beispielsweise ein Benutzer 5 an einer Sensoreinheit 40 einer Textilmaschine 10 an, können durch das Authentifizierungssystem 30 die Zugriffsrechte des Benutzers 5 ermittelt werden. Das Authentifizierungssystem 30 kann dann auf Basis der übermittelten Identifikationsdaten über eine Freigabe oder Sperre des Zugriffs auf die angeschlossene Textilmaschine 10 entscheiden und eine entsprechende Nachricht an das Steuersystem 20 beispielsweise an die Steuereinheit 22 übertragen.

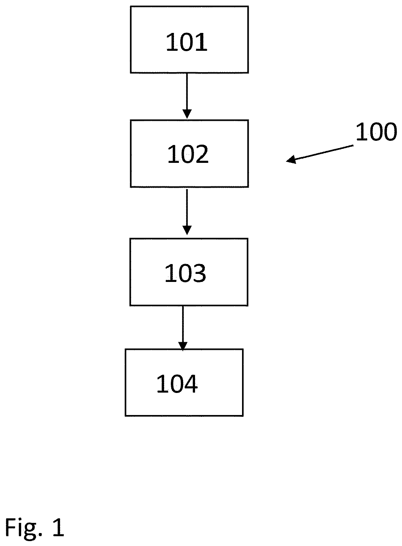

Fig. 1 zeigt schematisch ein Ausführungsbeispiel des erfindungsgemäßen Verfahrens 100. In Fig. 1 wird ein Verfahren 100 für eine Zugriffskontrolle für ein erfindungsgemäßes System 1 dargestellt.

Gemäß einem Schritt 101 wird eine Authentifizierungsanfrage durch ein Authentifizierungssystem 30 in einem zweiten Kommunikationsnetz 60 empfangen, wobei mit der Authentifizierungsanfrage eine Authentifizierung wenigstens eines Benutzers 5 angefragt wird, um den Zugriff auf die Textilmaschine 10 für den wenigstens einen Benutzer 5 freizugeben.

Danach wird in Schritt 102 die empfangene Authentifizierungsanfrage bezüglich einer Zugriffsberechtigung des wenigstens einen Benutzers 5 überprüft.

In Schritt 103 wird dann eine Freigabe des Zugriffs für den wenigstens einen Benutzer 5 erteilt, wenn die Zugriffsberechtigung durch die Überprüfung 102 bestätigt wird.

Gemäß Schritt 104 wird die erteilte Freigabe des Zugriffs des wenigstens einen Benutzers 5 an die Textilmaschine 10 und/oder an das Steuersystem 20 und/oder an die Sensoreinheit 40 übersendet.

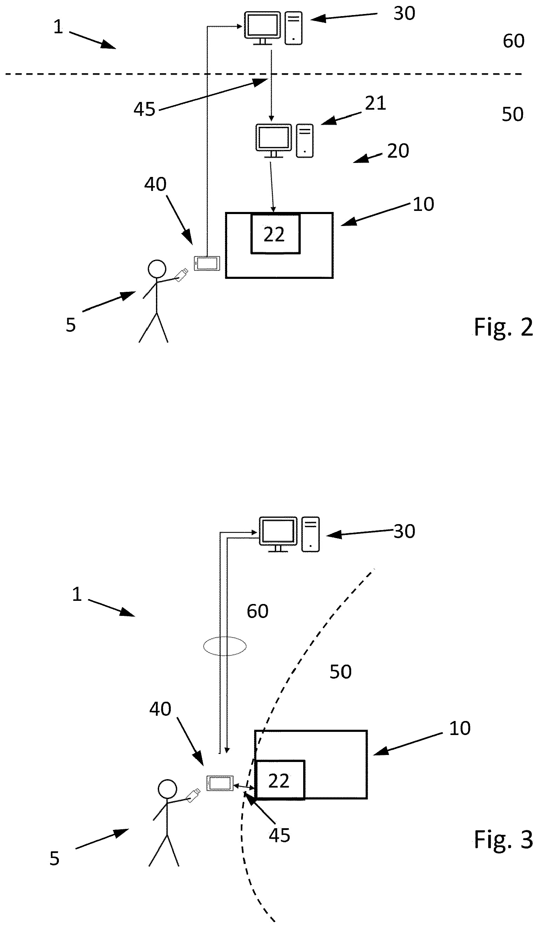

In Fig. 2 ist ein weiteres Ausführungsbeispiel eines erfindungsgemäßen Verfahrens 100 und Systems 1 abgebildet.

Das System 1 in Fig. 2 umfasst eine Textilmaschine 10 und ein Steuersystem 20 in einem ersten Kommunikationsnetz 50, welches beispielsweise ein Maschinennetzwerk sein kann. Das Steuersystem 20 kann eine Überwachungseinheit 21 und eine Steuereinheit 22 umfassen. Die Überwachungseinheit 21 des Steuersystems 20 kann eine Steuerungs- und Management-Software zum Überwachen und Verwalten einer oder mehrerer Textilmaschinen 10 umfassen. Ferner zeigt Fig. 2 ein Authentifizierungssystem 30 zur Authentifizierung von Identifikationsdaten eines Benutzers 5. Ferner weist das System 1 eine Sensoreinheit 40 zur Erfassung von Identifikationsdaten des Benutzers 5 auf. Das Authentifizierungssystem 30 ist in einem zweiten Kommunikationsnetz 60 angeordnet, wobei das zweite Kommunikationsnetz 60 beispielsweise ein Firmennetzwerk sein kann, welches z. B. als ein kabelgebundenes Ethernet-Kommunikationsnetz oder ein kabelloses WLAN-Kommunikationsnetz ausgeführt sein kann. Die beiden Kommunikationsnetze 50, 60 sind voneinander getrennte Netzwerke. Die voneinander getrennten Netzwerke sind aus daten-, und sicherheitstechnischen Gründen notwendig, um sowohl die Firmendaten wie auch die Maschinendaten gegen Missbrauch und unbefugten Zugriff zu schützen.

In dem Ausführungsbeispiel gemäß Fig. 2 meldet sich beispielsweise ein Benutzer mit seiner Firmenkarte, d. h. einer Smart Card oder Chipkarte, an der Sensoreinheit 40 an, wobei die Sensoreinheit 40 nicht im Maschinennetzwerk 50, sondern im Firmennetzwerk 60 angeordnet ist. Die Sensoreinheit 40 kann als ein Kartenlesegerät ausgeführt sein. Das Kartenlesegerät 40 ist in dem Firmennetzwerk 60 angeordnet.

Die Sensoreinheit 40 überträgt die auf der Smart Card hinterlegten Daten des Benutzers 5, beispielsweise die Identifikationsdaten des Benutzers, an das Authentifizierungssystem 30 zur Durchführung der Authentifizierung.

Das Authentifizierungssystem 30 prüft die empfangenen Identifikationsdaten des Benutzers 5 auf Basis eines hinterlegten Benutzerprofils von Zugriffsrechten und entscheidet basierend auf dieser Überprüfung über eine Freigabe oder Sperre des Zugriffs des Benutzers 5 auf das Steuersystem 20. In einem weiteren Schritt übermittelt das Authentifizierungssystem 30 eine Authentifizierungsinformation in Form einer Kommunikationsnachricht, welche die Freigabe oder die Sperre des Zugriffs von dem zweiten Kommunikationsnetz 60 an das Steuersystem 20 in dem ersten Kommunikationsnetz 50, beispielsweise an die Überwachungseinheit 21. Die Überwachungseinheit 21 kann eine Steuerungs- und Management-Software zum Überwachen und Verwalten der einen oder mehreren Textilmaschinen 10 umfassen. Nach Erhalt der Kommunikationsnachricht gibt die Überwachungseinheit 21 den Zugriff des Benutzers für die Textilmaschine 10 frei oder sperrt den Zugriff in Abhängigkeit der Überprüfung der Zutrittsberechtigung des Benutzers 5.

In Fig. 3 ist ein weiteres Ausführungsbeispiel des erfindungsgemäßen Verfahrens 100 und Systems 1 dargestellt. Das System 1 umfasst in diesem Ausführungsbeispiel eine Sensoreinheit 40 zur Erfassung von Identifikationsdaten, wobei die Sensoreinheit 40 in dem zweiten Kommunikationsnetz 60 angeordnet ist. Das zweite Kommunikationsnetz 60, welches wie in Fig. 2 dargelegt ausgeführt sein kann, umfasst weiter ein Authentifizierungssystem 30. Ferner weist das System eine Textilmaschine 10 auf, wobei die Textilmaschine 10 in einem ersten Kommunikationsnetz 50 angeordnet ist. Ferner umfasst das System 1 eine Steuereinheit 22 des Steuersystems für die Textilmaschine 10 und eine Schnittstelle 45 zwischen den beiden Kommunikationsnetzen 50, 60. Die Schnittstelle 45 dient in diesem Ausführungsbeispiel dazu, den Zugriff des Benutzers 5 zum Steuern der Textilmaschine freizugeben oder zu sperren.

In dem Ausführungsbeispiel gemäß Fig. 3 meldet sich der Benutzer 5 mit seiner Firmenkarte, d. h. einer Smart Card oder Chipkarte, an der Sensoreinheit 40 an. Die Sensoreinheit 40 erfasst in diesem Schritt die auf der Smart Card befindlichen Identifikationsdaten des Benutzers 5 und übermittelt die erfassten daten als Authentifizierungsanfrage an das Authentifizierungssystem 30 zur Durchführung der Authentifizierung. Das Authentifizierungssystem prüft die übermittelten Identifikationsdaten und entscheidet über eine Freigabe des Zugriffs des Benutzers 5. Die Authentifizierungsinformation bezüglich der Freigabe oder Sperre des Zugriffs kann beispielsweise als Kommunikationsnachricht gemäß diesem Ausführungsbeispiel an die Sensoreinheit 40 übersendet werden. Die Sensoreinheit 40 übersendet die Authentifizierungsinformation über die Schnittstelle 45 an die Steuereinheit 22 des Steuersystems 20 für die Textilmaschine 10, um den Zugriff des Benutzers 5 freizugeben oder zu sperren.

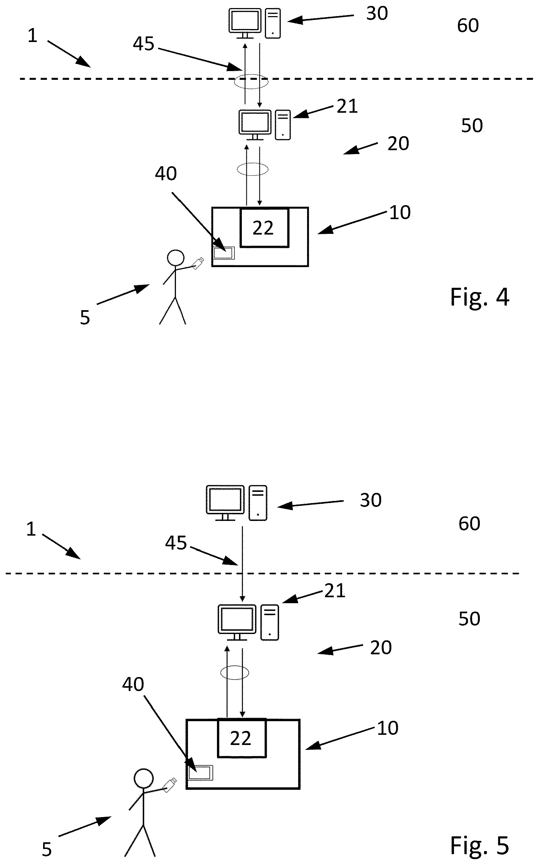

Fig. 4 zeigt ein weiteres Ausführungsbeispiel des erfindungsgemäßen Verfahrens 100 und Systems 1. Das System 1 umfasst in diesem Ausführungsbeispiel eine Textilmaschine 10, ein Steuersystem 20, umfassend eine Überwachungseinheit 21 und eine Steuereinheit 22 und ein Authentifizierungssystem 30. Ferner weist das System 1 eine Sensoreinheit 40 auf sowie eine Schnittstelle 45, welche die beiden Kommunikationsnetze 50, 60 kommunikativ miteinander verbindet.

Im Unterschied zu Fig. 2 und Fig. 3 befindet sich die Sensoreinheit 40 in diesem Beispiel in dem ersten Kommunikationsnetz 50, d. h. die Sensoreinheit 40, die Textilmaschine 10 und das Steuersystem 20 sind im ersten Kommunikationsnetz 50. Das erste Kommunikationsnetz 50 kann, wie in allen Ausführungsbeispielen dargestellt, beispielsweise ein Maschinennetzwerk sein, welches als ein kabelgebundenes oder kabelloses Kommunikationsnetz als Ethernet- und/oder ein WLAN- und/oder ZigBee- und/oder Bluetooth-Netz ausgeführt sein.

Gemäß Fig. 4 umfasst das Ausführungsbeispiel des erfindungsgemäßen Verfahrens 100 dabei die nachfolgenden Schritte.

Zunächst meldet sich ein Benutzer 5 mit seiner "Firmenkarte" an der Sensoreinheit 40 an, d. h., dass die Sensoreinheit 40, welche beispielsweise als Kartenlesegerät ausgeführt sein kann, die Identifikationsdaten des Benutzers 5 erfasst und in einem nächsten Schritt diese Daten als Authentifizierungsanfrage an die Überwachungseinheit 21 des Steuersystems 20 übermittelt. Gemäß einem weiteren Schritt übersendet die Überwachungseinheit 21 des Steuersystems 20 die Authentifizierungsanfrage über die Schnittstelle 45 an das Authentifizierungssystem 30 in das zweite Kommunikationsnetz 60 zur Durchführung der Authentifizierung. Das Authentifizierungssystem 30 prüft die empfangene Authentifizierungsanfrage und entscheidet über eine Freigabe oder Sperre des Zugriffs des Benutzers 5. In einem nächsten Schritt sendet das Authentifizierungssystem 30 die Authentifizierungsinformation bezüglich der Entscheidung der Freigabe oder Sperre des Zugriffs zurück über die Schnittstelle 45 an das Steuersystem 20, beispielsweise an die Überwachungseinheit 21. Danach gibt die Überwachungseinheit 21 bzw. das Steuersystem 20 den Zugriff des Benutzers 5 frei oder sperrt den Zugriff. Dabei übersendet die Überwachungseinheit 21 einen entsprechenden Steuerbefehl an die Steuereinheit 22, um den Zugriff des Benutzers 5 für die Textilmaschine 10 freizugeben oder zu sperren.

Fig. 5 zeigt ein weiteres Ausführungsbeispiel des erfindungsgemäßen Verfahrens 100 und erfindungsgemäßen Systems 1. Das System 1 umfasst in diesem Ausführungsbeispiel eine Textilmaschine 10, ein Steuersystem 20 und ein Authentifizierungssystem 30. Das Steuersystem umfasst eine Überwachungseinheit 21 und eine Steuereinheit 22. Ferner weist das System 1 eine Sensoreinheit 40 auf sowie eine Schnittstelle 45, welche die beiden Kommunikationsnetze 50, 60 kommunikativ miteinander verbindet. Im Unterschied zu Fig. 3 und Fig. 4 befindet sich die Sensoreinheit 40 in diesem Beispiel in dem ersten Kommunikationsnetz 50, d. h. die Sensoreinheit 40 und die Textilmaschine 10 sind im ersten Kommunikationsnetz 50.

Fig. 5 umfasst ein weiteres Ausführungsbeispiel des erfindungsgemäßen Verfahrens 100. Gemäß einem Schritt übersendet das Authentifizierungssystem 30 initial oder auf Anforderung des Steuersystems 20 eine Authentifizierungsinformation an die Überwachungseinheit 21 des Steuersystems 20. Die Authentifizierungsinformation umfasst ein oder mehrere Berechtigungsprofile für den Benutzer 5 für den Zugriff, wobei beispielsweise das jeweilige Berechtigungsprofil einen Umfang und/oder eine Konfiguration des Zugriffs für den jeweiligen Benutzer 5 definieren kann, zum Beispiel für die Steuerung unterschiedlicher Funktionen der Textilmaschine 10. Die Authentifizierungsinformation kann z. B. in Form einer Kommunikationsnachricht ausgeführt sein.

Wenn sich gemäß diesem Ausführungsbeispiel dann ein Benutzer 5 beispielsweise mit seiner "Firmenkarte" in Form einer Chipkarte oder Smart Card an der Sensoreinheit 40 der Textilmaschine 10, beispielsweise einem Kartenlesegerät, anmeldet, d. h. das Kartenlesegerät die Identifikationsdaten des Benutzers 5 erfasst, wird danach die Authentifizierungsanfrage umfassend diese Identifikationsdaten an die Überwachungseinheit 21 des Steuersystems 20 übermittelt. Die Überwachungseinheit 21 des Steuersystems 20 prüft und entscheidet gemäß diesem Ausführungsbeispiel anhand der vom Authentifizierungssystem 30 empfangenen Authentifizierungsinformation und den darin enthaltenen Berechtigungsprofilen über den Zugriff des Benutzers 5, d. h. über eine Freigabe oder Sperre.

Alternativ kann auch vorgesehen sein, dass nach Empfang der Authentifizierungsanfrage die Überwachungseinheit 21 eine Anforderung an das Authentifizierungssystem 30 sendet, um eine aktuelle Authentifizierungsinformation zu erhalten. Danach kann die Überwachungseinheit 21 über einen Zugriff auf Basis der empfangenen Authentifizierungsinformation entscheiden.

Optional kann in allen vorgenannten Ausführungsbeispielen das Authentifizierungssystem 30 eine Datenbank aufweisen, welche Daten für die Authentifizierung des wenigstens einen Benutzers 5 für den Zugriff, beispielsweise Zugriffs- und/oder Berechtigungsprofile für den wenigstens einen Benutzer 5 umfasst.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: System
- 5: Benutzer
- 10: Textilmaschine
- 20: Steuersystem
- 21: Überwachungseinheit
- 22: Steuereinheit

- 30: Authentifizierungssystem

- 40: Sensoreinheit
- 45: Schnittstelle

- 50: Erstes Kommunikationsnetz
- 60: Zweites Kommunikationsnetz

- 100: Verfahren
- 101: erster Verfahrensschritt
- 102: zweiter Verfahrensschritt
- 103: dritter Verfahrensschritt
- 104: vierter Verfahrensschritt

## Patentansprüche

1. System (1) für eine Zugriffskontrolle, aufweisend eine Textilmaschine (10) und ein Steuersystem (20) zum Überwachen und Steuern der Textilmaschine (10), wobei vorzugsweise das Steuersystem (20) eine Überwachungseinheit (21) und eine Steuereinheit (22) zum Überwachen und Steuern der Textilmaschine (10) umfasst, wobei die Textilmaschine (10) und das Steuersystem (20) in einem ersten Kommunikationsnetz (50) für die Übertragung von Steuerbefehlen, insbesondere Steuerungssignalen, zum Überwachen und Steuern der Textilmaschine (10) angeordnet sind,
**dadurch gekennzeichnet,**
**dass** das System (1) ein Authentifizierungssystem (30) aufweist, wobei das Authentifizierungssystem (30) in einem zweiten Kommunikationsnetz (60) angeordnet ist, und wobei das Authentifizierungssystem (30) dazu ausgebildet ist, wenigstens einen Benutzer (5) zu authentifizieren, um einen Zugriff für die Steuerung der Textilmaschine (10) in dem ersten Kommunikationsnetz (50) freizugeben, vorzugsweise einen Zugriff für eine Einstellung und/oder Konfiguration von Produktionsparametern für die Textilmaschine (10) durch den wenigstens einen Benutzer (5) freizugeben.

2. System (1) nach Anspruch 1,
**dadurch gekennzeichnet,**
**dass** das System (1) eine Sensoreinheit (40) für die Erfassung von Identifikationsdaten des wenigstens einen Benutzers (5) zur Authentifizierung aufweist, wobei die Sensoreinheit (40) in dem ersten oder in dem zweiten Kommunikationsnetz (50, 60) angeordnet ist.

3. System (1) nach Anspruch 2,
**dadurch gekennzeichnet,**
**dass** die Sensoreinheit (40) in dem zweiten Kommunikationsnetz (60) dazu ausgebildet ist, die erfassten Identifikationsdaten an das Authentifizierungssystem (30) zur Authentifizierung zu übermitteln, und/oder die Sensoreinheit (40) in dem ersten Kommunikationsnetz (50) dazu ausgebildet ist, die erfassten Identifikationsdaten an das Authentifizierungssystem (30) zur Authentifizierung oder an das Steuersystem (20) zur Authentifizierung zu übermitteln.

4. System (1) nach Anspruch 2 oder 3,
**dadurch gekennzeichnet,**
**dass** die Sensoreinheit (40) ein Kartenlesegerät und/oder ein Finger-Print-Scanner und/oder einen Retina-Scanner und/oder eine Kamera mit Gesichtserkennung und/oder Spracherkennung aufweist.

5. System (1) nach einem der vorhergehenden Ansprüche,
**dadurch gekennzeichnet,**
**dass** das System (1) eine Schnittstelle (45) aufweist, welche die Textilmaschine (10) und/oder das Steuersystem (20) in dem ersten Kommunikationsnetz (50) mit dem Authentifizierungssystem (30) in dem zweiten Kommunikationsnetz (60) kommunikationstechnisch verbindet, und wobei die Schnittstelle (45) dazu ausgebildet ist, eine Authentifizierungsinformation von dem Authentifizierungssystem (30) an die Textilmaschine (10) und/oder an das Steuersystem (20) zu übertragen, um den Zugriff für die Steuerung für den wenigstens einen Benutzer (5) freizugeben oder zu sperren.

6. System (1) nach Anspruch 5,
**dadurch gekennzeichnet,**
**dass** die Schnittstelle (45) eine Konvertierungseinheit aufweist, welche dazu ausgebildet ist, ein Datenformat und/oder ein Netzprotokoll der Authentifizierungsinformation bei der Übertragung zwischen den beiden Kommunikationsnetzen (50, 60) für die Einstellung von Produktionsparametern für die Textilmaschine (10) zu konvertieren.

7. System (1) nach Anspruch 5 oder 6,
**dadurch gekennzeichnet,**
**dass** die Authentifizierungsinformation eine Kommunikationsnachricht bezüglich einer Freigabe oder einer Sperre des Zugriffs des wenigstens einen Benutzers (5) für die Steuerung der Textilmaschine (10) und/oder eine Kommunikationsnachricht umfassend ein oder mehrere Berechtigungsprofile für den wenigstens einen Benutzer (5) für den Zugriff umfasst, wobei vorzugsweise das jeweilige Berechtigungsprofil einen Umfang und/oder eine Konfiguration des Zugriffs für den jeweiligen Benutzer (5), insbesondere für die Steuerung unterschiedlicher Funktionen der Textilmaschine (10) und/oder des Steuersystems (20), definiert.

8. System (1) nach einem der vorhergehenden Ansprüche,
**dadurch gekennzeichnet,**
**dass** das Authentifizierungssystem (30) eine Datenbank aufweist, welche Daten für die Authentifizierung des wenigstens einen Benutzers (5) für den Zugriff, insbesondere Zugriffs- und/oder Berechtigungsprofile für den wenigstens einen Benutzer (5), umfasst.

9. System (1) nach einem der vorhergehenden Ansprüche,
**dadurch gekennzeichnet,**
**dass** die Textilmaschine (10) als eine Spul- oder Spinnmaschine ausgeführt ist, vorzugsweise als eine Luftspinnmaschine oder eine Rotorspinnmaschine oder eine Ringspinnmaschine, wobei die Textilmaschine (10) eine Vielzahl nebeneinander angeordneter Arbeitsstellen aufweist, vorzugsweise Spinn- oder Spulstellen, welche jeweils zur Durchführung wenigstens eines Produktionsschrittes für eine Produktion eines Textilproduktes ausgeführt sind, wobei die Steuerung der Textilmaschine (10) durch das Steuersystem (20) zumindest eine der folgenden Aktionen umfasst, um die zumindest eine Aktion im Falle des freigegebenen Zugriffs für den Benutzer verfügbar zu machen:
- Einstellen wenigstens eines Parameters der Textilmaschine,
- Einstellen wenigstens eines Parameters der Arbeitsstellen,
- Einstellen wenigstens eines Parameters für die Produktion,
- Starten der Textilmaschine, insbesondere der Produktion,
- Einstellen eines Spinnmittels, eines Garnparameters, eines Anspinnparameters, eines Spulparameters, eines Reinigerparameters der Textilmaschine,
- Anzeigen von Messergebnissen wenigstens eines Sensors der Textilmaschine,
- Aktivieren oder Deaktivieren von einzelnen der Arbeitsstellen,
- Aufrufen einer grafischen Benutzeroberfläche für die Textilmaschine.

10. System (1) nach einem der vorhergehenden Ansprüche,
**dadurch gekennzeichnet,**
**dass** das erste Kommunikationsnetz (50) ein übergeordnetes Kommunikationsnetz (50), und das zweite Kommunikationsnetz (60) ein Maschinen-Kommunikationsnetz (60) der Textilmaschine (10) ist, wobei das Maschinen-Kommunikationsnetz (60) als ein separates Kommunikationsnetz zum ersten Kommunikationsnetz (50) ausgebildet und/oder dem ersten Kommunikationsnetz (50) untergeordnet und/oder als ein Subnetz des ersten Kommunikationsnetzes (50) ausgebildet ist und/oder dass das erste und/oder das zweite Kommunikationsnetz (50, 60) ein kabelgebundenes und/oder kabelloses Kommunikationsnetz aufweisen, vorzugsweise ein Ethernet-Netzwerk und/oder ein Glasfaser-Netzwerk und/oder ein WLAN-Netzwerk und/oder ein ZigBee-Netzwerk und/oder ein Bluetooth-Netzwerk.

11. Verfahren (100) für eine Zugriffskontrolle für ein System (1) nach einem der vorhergehenden Ansprüche,
umfassend die nachfolgenden Schritte:
- Empfangen (101) einer Authentifizierungsanfrage durch ein Authentifizierungssystem (30) in einem zweiten Kommunikationsnetz (60), wobei mit der Authentifizierungsanfrage eine Authentifizierung wenigstens eines Benutzers (5) angefragt wird, um den Zugriff auf die Textilmaschine (10) für den wenigstens einen Benutzer (5) freizugeben,
- Überprüfen (102) der empfangenen Authentifizierungsanfrage bezüglich einer Zugriffsberechtigung des wenigstens einen Benutzers (5),
- Erteilen (103) einer Freigabe des Zugriffs für den wenigstens einen Benutzer (5), wenn die Zugriffsberechtigung durch die Überprüfung (102) bestätigt wird,
- Übersenden (104) der erteilten Freigabe des Zugriffs des wenigstens einen Benutzers (5) an die Textilmaschine (10) und/oder an das Steuersystem (20) und/oder an die Sensoreinheit (40).

12. Verfahren (100) nach Anspruch 11,
**dadurch gekennzeichnet,**
**dass** das Verfahren (100) die weiteren nachfolgenden Schritte umfasst:
- Verweigern des Zugriffs für den wenigstens einen Benutzer (5) für die Steuerung der Textilmaschine (10), wenn die Zugriffsberechtigung durch die Überprüfung (102) abgelehnt wurde,
wobei im Falle des Verweigerns der nachfolgende Schritt durchgeführt wird:
- Übersenden einer Sperre des Zugriffs für den wenigstens einen Benutzer (5) an die Textilmaschine (10) und/oder an das Steuersystem (20) und/oder an die Sensoreinheit (40).

13. Verfahren (100) nach Anspruch 11 oder 12,
wobei das Verfahren (100) zumindest einen der nachfolgenden Schritte umfasst:
- Übertragen einer Authentifizierungsinformation für die Authentifizierung des Zugriffs des wenigstens einen Benutzers (5) an die Textilmaschine (10) und/oder an das Steuersystem (20) und/oder an die Sensoreinheit (40),
wobei die Authentifizierungsinformation eine Kommunikationsnachricht bezüglich einer Freigabe oder einer Sperre des Zugriffs des wenigstens einen Benutzers (5) für die Textilmaschine (10) umfasst,
- Übertragen einer Authentifizierungsinformation für die Authentifizierung des Zugriffs des wenigstens einen Benutzers (5) an das Steuersystem (20),
wobei die Authentifizierungsinformation eine Kommunikationsnachricht aufweist, welche ein oder mehrere Zugriffsberechtigungsprofile für den wenigstens einen Benutzer (5) zur Auswertung durch das Steuersystem (20), insbesondere durch die Überwachungseinheit (21), umfasst,
- Erfassen von Identifikationsdaten des wenigstens einen Benutzers (5) durch die Sensoreinheit (40), wobei die erfassten Identifikationsdaten für eine Identifizierung des wenigstens einen Benutzers zu einem Berechtigungsprofil oder Zugriffsprofil für die Steuerung unterschiedlicher Funktionen der Textilmaschine (10) und/oder des Steuersystems (20) spezifisch sind,
- Übersenden der empfangenen Identifikationsdaten an das Authentifizierungssystem (30) zur Authentifizierung.

14. Computerprogramm, umfassend Befehle, die bei der Ausführung des Computerprogramms durch einen Computer diesen veranlassen, das Verfahren (100) nach einem der Ansprüche 11 bis 13 auszuführen.

15. Vorrichtung zur Datenverarbeitung, insbesondere zumindest teilweise angeordnet in einem Authentifizierungssystem (30) und/oder in einem Steuersystem (20) des Systems (1) nach einem der Ansprüche 1 bis 10, umfassend Mittel zur Ausführung des Verfahrens (100) nach einem der Ansprüche 11 bis 13.
